(19) Europäisches Patentamt
European Patent Office
Office européen des brevets

(11) Numéro de publication: **0 040 110**
**A1**

(12) **DEMANDE DE BREVET EUROPEEN**

(21) Numéro de dépôt: **81400534.4**

(22) Date de dépôt: **02.04.81**

(51) Int. Cl.$^3$: **C 05 F 11/08**

(30) Priorité: **08.05.80 FR 8010280**

(43) Date de publication de la demande: **18.11.81 Bulletin 81/46**

(84) Etats contractants désignés: **BE CH DE GB IT LI NL**

(71) Demandeur: **Grenet, Edouard Paul**
**28, rue Bapst**
**F-92600 Asnieres(FR)**

(72) Inventeur: **Grenet, Edouard Paul**
**28, rue Bapst**
**F-92600 Asnieres(FR)**

(74) Mandataire: **Roger-Petit, Jean-Camille et al,**
**OFFICE BLETRY 2, Boulevard de Strasbourg**
**F-75010 Paris(FR)**

(54) **Engrais stimulant la germination et son application.**

(57) Cet engrais est une association d'hématoporphyrine et de bactéries anaérobies non pathogènes, cellulolytiques et génératrices d'azote ammoniacal par fixation de l'azote ambiant; il s'agit de préférence d'une solution aqueuse d'hématoporphyrine contenant une culture desdites bactéries.

On traite les graines en les faisant tremper dans cette association avant de les semer, ou en les arrosant, après les avoir semées, avec une eau additionnée de ladite association.

EP 0 040 110 A1

Croydon Printing Company Ltd

La présente invention a pour objet un engrais stimulant la germination des graines de plantes.

Il est déjà connu, pour favoriser la germination, d'inoculer aux graines, avant de les semer, des bactéries anaérobies non pathogènes, qui sont à la fois cellulolytiques et génératrices d'azote ammoniacal par fixation de l'azote ambiant. Ces bactéries sont donc aussi des bactéries dites "NIF" (nitrogen fixing, ce qui signifie fixant l'azote). Ainsi, ces bactéries proliféreront en dégradant la cellulose présente dans le sol (par exemple sous forme de pailles résiduelles, racines, feuilles, etc..) et, simultanément, elles engendreront dans le sol de l'azote ammoniacal suivant la réaction : $N_2 + 6H(+) + 6e(-) \longrightarrow 2\ NH_3$. En outre, ces bactéries robustes et non pathogènes éliminent par concurrence vitale les bactéries anaérobies pathogènes, telles que les salmonelles. On peut citer, comme bactéries anaérobies cellulolytiques et NIF particulièrement convenables, les souches Clostridium, notamment butyricum et pasteurianum, ainsi que les souches Plectridium. En ce qui concerne les propriétés de ces souches Clostridium, et, notamment, leur aptitude à fixer l'azote moléculaire et à le transformer par réduction en azote ammoniacal, sous l'effet d'un complexe enzymatique qu'elles possèdent, la nitrogénase, on se reportera aux ouvrages d'Yvon Dommergues "Biologie des Sols" et "Ecologie Microbienne du Sol", Editeur MASSON & Cie, PARIS. Les Clostridium sont très tolérants vis-à-vis du pH, ils s'adaptent à tous les sols, puisqu'on les trouve aussi bien dans un sol à pH 4,5 que dans les sols calcaires. Comme ils sont anaérobies ou micro-

aérophiles, ils sont favorisés par les fortes humidités; on les rencontre donc dans les sols submergés; mais ils ne craignent que partiellement une forte oxygénation et se développent aussi dans les sols considérés comme bien aérés, dans les foyers d'anaérobiose totale ou partielle qui y existent toujours. De surcroît, placés dans de mauvaises conditions, ils sporulent; sous la forme de spores, ils résistent à la dessiccation, demeurent plus ou moins en sommeil et redeviennent actifs dès que les conditions sont à nouveau favorables.

Le fait pour un engrais d'engendrer de l'azote ammoniacal est avantageux en tout temps, mais est particulièrement précieux au moment des semailles et de la germination. En outre, les bactéries cellulolytiques NIF agissent comme des régulateurs de la teneur en azote des sols; elles ne fixent l'azote pour produire de l'ammoniaque que lorsque le milieu commence à être pauvre en azote; elles sont ainsi un facteur d'équilibre minéral.

La présente invention a pour but un engrais destiné au traitement des graines, afin de stimuler la germination de celles-ci, qui est caractérisé en ce qu'il est une association d'hématoporphyrine et de bactéries cellulolytiques NIF.

L'hématoporphyrine, de formule brute $C_{34}H_{38}O_6N_4$, a la formule développée suivante :

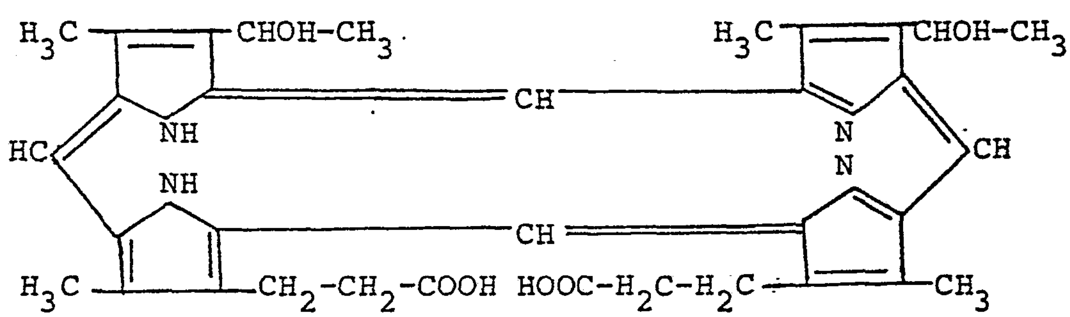

Cette hématoporphyrine est préparée selon le procédé de Nencki (emploi de chlorure de fer ferrique dans la réaction de Friedel et Crafts).

L'hématoporphyrine est utilisée comme médicament, soit par voie orale, comme anti-anémique, soit par injection pour traiter les maladies nerveuses. Dans ce dernier cas, on opère par injection intramusculaire profonde, car il a été constaté que l'hématoporphyrine entraîne une forte sensibilisation à la lumière, provoquant des taches sur la peau.

On a eu l'idée, suivant la présente invention, d'utiliser cette propriété, néfaste en médecine humaine, mais a priori très utile pour le traitement des plantes, à savoir la forte sensibilisation à la lumière, qui devait normalement exalter la photosynthèse chez les végétaux chlorophylliens, même dans des lieux mal éclairés. C'est ce qui a effectivement été constaté.

D'autre part, l'hématoporphyrine peut coexister avec les bactéries anaérobies cellulolytiques et NIF sans être détruite par celles-ci.

Il en est résulté la présente invention consistant à associer ces bactéries utiles aux plantes à l'hématoporphyrine, qui est une sorte de catalyseur de la photosynthèse. Il y a lieu de remarquer que si les bactéries ne nuisent en rien à l'hématoporphyrine, de même cette dernière ne gêne aucunement les bactéries et leur prolifération; il y a donc compatibilité parfaite entre ces deux constituants de la présente association.

L'hématoporphyrine, qui est une poudre hydrosoluble, est avantageusement utilisée sous forme de solution aqueuse. On introduit dans cette solution une culture de bactéries anaérobies cellulolytiques et NIF. On a constaté qu'un tel mélange se conserve parfaitement bien et que les bactéries prolifèrent, lorsqu'il est placé sur un sol cellulosique.

On peut éventuellement adjoindre à ces bactéries d'autres bactéries compatibles avec les premières, mais qui sont seulement NIF et sont de plus spécifiques de plantes cultivées avec lesquelles elles vivent en symbiose. On peut citer par exemple les bactéries NIF Rhizobium, qui vivent en symbiose dans la racine des plantes fourragères et dont chaque souche est spécifique de telle ou telle plante, par exemple maïs, seigle, luzerne.

Les bactéries anaérobies cellulolytiques et NIF sont conservées dans des milieux de culture classiques pour de telles bactéries, pouvant contenir opportunément de la cellulose sous n'importe quelle forme, afin qu'elles ne perdent pas l'habitude de dégrader la cellulose, autrement dit qu'elles ne deviennent pas "paresseuses", selon l'expression des bactériologistes, compte tenu du rôle qu'elles doivent jouer.

Il est possible de stocker ces cultures de bactéries en mélange avec une solution d'hématoporphyrine, puisque, comme on l'a vu ci-dessus, il y a parfaite compatibilité.

La teneur en hématoporphyrine de la solution aqueuse de cette substance peut varier dans de larges limites, puisqu'il suffit, avec une concentration plus faible, d'utiliser une dose plus forte de solution et puisque la dilution finale peut varier en fonction du volume de culture de bactéries ajouté et surtout du volume d'eau d'arrosage, avec lequel on dilue généralement l'association au moment de l'emploi. Cette teneur peut être comprise, par exemple, entre 0,2% et 5% en poids. La dose active d'hématoporphyrine varie avec la nature de la plante traitée et est à déterminer expérimentalement dans chaque cas. A titre d'exemple, la proportion en poids d'hématoporphyrine dans l'association diluée à l'eau avant l'emploi, en vue du traitement des graines par trempage ou arrosage, pourra être comprise, suivant le cas, entre 0,0002% (cas d'une plante d'appartement) et 0,005% (cas d'une plante cultivée à grande échelle dans la campagne, telle que graminée ou légumineuse).

Quant aux bactéries NIF, elles constituent un ensemencement; elles se développent dès qu'il y a de la cellulose dans le sol; leur apport n'est donc pas quantitatif, mais essentiellement qualitatif; avec seulement 10 bactéries ou spores robustes au mètre carré de sol, s'il y a un tant soit peu de cellulose dans celui-ci, les bactéries se multiplient et ont l'action désirée.

On décrit dans l'exemple ci-après une composition particulière de l'association selon l'invention, son mode de préparation et son utilisation.

EXEMPLE

L'association est constituée

1°) par une solution aqueuse à 5 % en poids d'hématoporphyrine en poudre et

2°) par une culture de bactéries anaérobies cellulolytiques et NIF de la souche Clostridium butyricum contenant environ 300.000 bactéries par $cm^3$ de milieu de culture, les proportions des deux constituants étant telles que 125 $cm^3$ de l'association contiennent 1 $cm^3$ de la culture de bactéries.

L'association est obtenue par un simple mélange de la solution aqueuse d'hématoporphyrine et de la culture de bactéries.

On traite les graines, dont on veut stimuler la germination, en les faisant tremper dans l'association telle que préparée ci-dessus, avant de les semer, ou bien en les semant et en les arrosant ensuite avec une eau d'arrosage contenant ladite association du type décrit ci-dessus. On peut, par exemple, ajouter à l'eau d'arrosage 1 % en volume de ladite association liquide décrite ci-dessus. Il est connu de munir les tuyauteries d'arrosage de doseurs permettant d'introduire dans cette eau un additif dans une proportion voulue.

EXEMPLE PARTICULIER D'UTILISATION

On a fait pousser, d'une part, une graminée et, d'autre part, une légumineuse, sur un sol pauvre matérialisé par du coton (qui contient 80 % de cellulose) flottant sur de l'eau. Dans chaque cas, on a effectué une culture avec de l'eau pure (culture témoin) et une autre culture avec de l'eau à laquelle on avait ajouté 1 % en volume de l'association liquide suivant l'invention, telle que décrite dans le précédent exemple.

Les graines étaient posées sur la surface du coton. On a surveillé leur germination en fonction du temps en mesurant chaque jour la hauteur de la tige, après la germination. Les résultats sont rapportés dans le tableau ci-après. Les cases hachurées correspondent aux jours où la germination n'a pas encore commencé.

| | Mardi 1er jour | Mercredi | Jeudi | Vendredi | Samedi | Dimanche | Lundi | Mardi 8ème jour |
|---|---|---|---|---|---|---|---|---|
| Graminée + l'association suivant l'invention | | | pousse de 4 mm | pousse de 8 mm | pousse de 11 mm | pousse de 13 mm | pousse de 15 mm | pousse de 1,8 cm |
| Graminée témoin (sans additif) | | | | | petite pousse | petite pousse | pousse de 4 mm | pousse de 5 mm |
| Légumineuse + l'association suivant l'invention | | petite pousse | pousse de 3 mm | pousse de 6 mm | pousse de 8 mm | pousse de 10 mm | pousse de 13 mm | pousse de 1,4 cm |
| Légumineuse témoin (sans additif) | | | | | petite pousse | petite pousse | pousse de 7 mm | pousse de 8 mm |

| | mercredi 9ème jour | jeudi | vendredi | samedi | dimanche | lundi | mardi 15ème jour |
|---|---|---|---|---|---|---|---|
| Graminée + l'association suivant l'invention | pousse de 1,9 cm | pousse de 2,1 cm | pousse de 2,3 cm | pousse de 2,5 cm | pousse de 2,6 cm | pousse de 2,8 cm | pousse de 3 cm |
| Graminée témoin (sans additif) | pousse de 7 mm | pousse de 9 mm | pousse de 10 mm | pousse de 1,1 cm | pousse de 1,3 cm | pousse de 1,4 cm | pousse de 1,5 cm |
| Légumineuse + l'association suivant l'invention | pousse de 1,6 cm | pousse de 1,7 cm | pousse de 1,9 cm | pousse de 2 cm | pousse de 2,1 cm | pousse de 2,2 cm | pousse de 2,3 cm |
| Légumineuse témoin (sans additif) | pousse de 9 mm | pousse de 1 cm | pousse de 1,1 cm | pousse de 1,2 cm | pousse de 1,3 cm | pousse de 1,5 cm | pousse de 1,6 cm |

Il ressort de façon évidente du tableau ci-dessus que les graines traitées se développent beaucoup plus vite que les graines témoin et il est bien connu que plus une graine lève vite, plus la plante sera grande et plus son rendement sera important. Les essais comparatifs rapportés dans le tableau prouvent l'intérêt de l'association suivant la présente invention pour la stimulation de la germination, puisqu'au bout de 15 jours, la longueur de pousse est double dans le cas de la graminée traitée et est 50 % supérieure dans le cas de la légumineuse traitée.

On observe, dans cette expérience, tant en cours de croissance qu'à l'issue de l'utilisation des réserves, des différences significatives, le coton( riche en cellulose) jouant le rôle des racines et déchets agricoles cellulosiques existant naturellement dans les sols.

HUIT PAGES.- P/P de GRENET Edouard Paul

L'un des Mandataires,

# R E V E N D I C A T I O N S

1.- Engrais stimulant la germination, caractérisé en ce qu'il est une association d'hématoporphyrine et de bactéries anaérobies non pathogènes, cellulolytiques et génératrices d'azote ammoniacal par fixation de l'azote ambiant.

2.- Engrais suivant la revendication 1, caractérisé en ce que ladite association est sous forme d'une solution aqueuse d'hématoporphyrine contenant une culture desdites bactéries.

3.- Engrais suivant la revendication 1 ou 2, caractérisé en ce que lesdites bactéries sont choisies parmi les souches Clostridium et Plectridium.

4.- Engrais suivant l'une quelconque des revendications 1 à 3, caractérisé en ce qu'il contient en outre des bactéries uniquement génératrices d'azote ammoniacal par fixation de l'azote ambiant et qui sont spécifiques de plantes cultivées avec lesquelles elles vivent en symbiose.

5.- Engrais suivant l'une quelconque des revendications 1 à 3, caractérisé en ce que ladite association est constituée par une solution aqueuse à 5 % en poids d'hématoporphyrine mélangée avec une culture desdites bactéries contenant environ 300.000 bactéries par $cm^3$ de milieu de culture.

6.- Engrais suivant la revendication 5, caractérisé en ce que 125 $cm^3$ de ladite association contiennent 1 $cm^3$ de la culture de bactéries.

7.- Application au traitement des graines de l'engrais suivant l'une quelconque des revendications 2 à 6, caractérisée en ce que l'on fait tremper les graines dans ladite association, avant de les semer.

8.- Application au traitement des graines de l'engrais suivant l'une quelconque des revendications 2 à 6, caractérisée en ce qu'après avoir semé les graines, on les arrose avec une eau d'arrosage additionnée de ladite association.

9.- Application selon la revendication 8, caractérisée en ce que l'eau d'arrosage contient 1 % en volume de ladite association sous forme liquide.

DEUX PAGES.- P/P de GRENET Edouard Paul

L'un des Mandataires,

Office européen des brevets

**RAPPORT DE RECHERCHE EUROPEENNE**

**0040110**

Numéro de la demande

EP 81 40 0534

| Catégorie | DOCUMENTS CONSIDERES COMME PERTINENTS<br>Citation du document avec indication, en cas de besoin, des parties pertinentes | Revendication concernée | CLASSEMENT DE LA DEMANDE (Int. Cl.³) |
|---|---|---|---|
| A | DE - A - 1 808 470 (LOPEZ) | | C 05 F 11/08 |
| A | FR - A - 1 301 974 (HUMUS & CALCAIRES) | | |
| A | FR - A - 645 533 (TRUFFAUT) | | |
| A | FR - A - 1 439 228 (MIDWEST RESEARCH INSTITUTE) | | |
| A | FR - A - 2 025 147 (HOLZINGER) | | |
| | ---- | | |

DOMAINES TECHNIQUES RECHERCHES (Int. Cl.³)

C 05 F 11/08
A 01 N 21/00

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

✓ Le présent rapport de recherche a été établi pour toutes les revendications

| Lieu de la recherche | Date d'achèvement de la recherche | Examinateur |
|---|---|---|
| La Haye | 07-08-1981 | STEELANDT |